Europäisches Patentamt

European Patent Office

Office européen des brevets

(19)

(11) Publication number : **0 286 413 B1**

(12) # EUROPEAN PATENT SPECIFICATION

(45) Date of publication of patent specification :
**14.09.94 Bulletin 94/37**

(51) Int. Cl.⁵ : **G09B 5/02,** G06F 15/62

(21) Application number : **88303135.3**

(22) Date of filing : **07.04.88**

(54) **Image information display system for a lecturer.**

(30) Priority : **07.04.87 JP 86281/87**
**07.04.87 JP 86282/87**
**07.04.87 JP 86283/87**

(43) Date of publication of application :
**12.10.88 Bulletin 88/41**

(45) Publication of the grant of the patent :
**14.09.94 Bulletin 94/37**

(84) Designated Contracting States :
**DE FR GB**

(56) References cited :
**DE-A- 3 416 259**
**DE-B- 2 624 201**
**IBM TECHNICAL DISCLOSURE BULLETIN,**
**vol. 26, no. 3B, August 1983, pages 1487-1488,**
**New York, US; P.J. KENNEDY:**
**"Video-enhanced computer-aided teaching-**
**system"**
**PATENT ABSTRACTS OF JAPAN, vol. 9, no. 27**
**(E-294)[1750], 6th February 1985;**
**& JP - A - 59 171 359 (MATSUSHITA DENKI**
**SANGYO K.K.) 27-09-1984**
**PATENT ABSTRACTS OF JAPAN, vol. 11, no.**
**79 (P-555)[2526], 11th March 1987; & JP - A - 61**
**235 981 (TOSHIBA CORP.) 21-10-1986**

(73) Proprietor : **SHARP KABUSHIKI KAISHA**
**22-22 Nagaike-cho**
**Abeno-ku**
**Osaka 545 (JP)**

(72) Inventor : **Aono, Tomoko**
**2613-1, Ichinomoto-cho**
**Tenri-shi Nara-ken (JP)**
Inventor : **Noguchi, Yoji**
**778-2, Ichibu-cho**
**Ikoma-shi Nara-ken (JP)**
Inventor : **Yamane, Yasukuni**
**28-15, Sakate**
**Tawaramoto-cho**
**Shiki-gun Nara-ken (JP)**
Inventor : **Kako, Noritoshi**
**2-6-42, Chiyogaoka**
**Nara-shi Nara-ken (JP)**

(74) Representative : **Brown, Kenneth Richard et al**
**R.G.C. Jenkins & Co.**
**26 Caxton Street**
**London SW1H 0RJ (GB)**

EP 0 286 413 B1

## Description

This invention relates to image information display systems which have digital image processing functions and it especially relates to electronic presentation systems which have functions that allow editing, preparing and display figures, photos and descriptions and other image data used for presentations in meetings, lectures etc.

Prior art image display systems used for presentations have included overhead projectors (OHP) to magnify and project images on film by optical methods, slide projectors to project slide film images onto a screen using the light of optical lamps, combinations of a video camera and video monitor, etc. However, with these overhead projectors and slide projectors, the image recorded on each film is displayed as it is and therefore the original must be prepared very carefully with the expenditure of much time and labour in order to obtain a clear, satisfactory image. For this reason as well, dynamic displays showing movement, or changes in an image are difficult to effect, and effective displays are not, therefore, available.

In the case of an OHP, the image can be changed by moving the transparent film or placing another transparent film over it. It can also be altered by writing on the transparent film during projection. However, since these operations are conducted on the spot and by hand, it is still difficult to obtain satisfactory images. In addition, since only one screen (picture) is used that has a relatively low brightness, such images and display systems are unsatisfactory for use in presentations to a large number of people.

As a result, several image information display systems have been proposed in which information to be presented is prepared by an image formation or image processing technique. These techniques make use of computers and allow the image to be shown on a large-size projector or display. With such systems, the data corresponding to an image to be displayed or data relating to changes in, or processing of, the image on display can be prepared in advance. The image data is prepared on the basis of the data corresponding to the image to be presented, and the data is presented by a large-size projector or display for the lecturer. The image presented can be changed in accordance with data relating to changes in and processing of the image. This method has advantages over overhead projectors or slide projectors, in the presentation and changing of various images, as well as in the dynamic presentation of images, and presentation of clear images.

An electronically controlled lecture desk is described in DE 3,412,259 A1. In this system stored images for any one of a number of lectures can be displayed to an audience with automatic and forward/backward display facilities.

Another presentation device is described in JP 61-235981 (A). This device provides enhanced images to both a screen and a plurality of small pattern display devices.

JP 59-171359 (A) describes a lecture rostrum that converts an image drawn on an input tablet into a digital signal for display on a display device on the rostrum and the signal is also output to a prepared terminal.

However, such image information display systems using computers have one or more of the following problems.

(1) As the same images are presented on the display for both the audience and lecturer, the lecturer must explain the images on display, by reading notes about the image displayed or from memory.

As a result, some points of explanation may be omitted, mistakes in explanation may be made, or the explanation may be insufficient in some areas.

In addition, the images must be presented in a predetermined order requiring the lecturer to memorize the order of images in order form them to be shown at the relevant time. This can be difficult for the lecturer and may prevent smooth progress of the lecture if the lecturer needs to feed the image data forward or backward one by one to reach the desired image.

(2) When it is necessary for the lecturer to know the current time, or the time elapsed, or time remaining for the lecture he has to look at a clock provided in the lecture hall or his own watch. This action prevents the lecturer from getting carried away with the lecture. If, however, he fails to check the time, there is a strong possibility that he will exceed the time specified for the lecture.

(3) As the lecturer simply presents images to an audience in a normal lecturing situation on a large-size projector or monitor, there is no way of knowing whether the speed of his talk, loudness of his voice, or attitude are proper for the occasion. Neither can he tell whether the size, brightness or colour of the picture makes them easy to see and he is, therefore, powerless to improve on such unfavourable points during his lecture.

An aim of the present invention is to alleviate at least some of the problems of prior art devices.

In accordance with a first aspect of the present invention, there is provided an image information display system for a lecturer comprising: a removable non-volatile memory for storing first data corresponding to first image data for audiences, and second image data corresponding to data for a lecturer which provides an explanation for said image data for audiences; reading means for reading said first data corresponding to said first image data for audiences and said second data corresponding to said data for said lecturer from said removable non-volatile memory; a first image data memory for storing said first data corresponding to said first image data for audiences, said first data been written to said second image memory from said removable non-volatile memory by said reading means; a second image data memory for storing said second data corresponding to said second image data for said lecturer, said second data been written to said second image data memory from said removable non-volatile memory by said reading means; image data formation means for converting said first data from said first image data memory corresponding to said first image data for audiences into converted first image data for audiences and storing said converted first image data for audiences in said first image data memory, and converting said second data from said second image data memory corresponding to said data for said lecturer into converted second explanation image data for said lecturer which has a transparent background and storing said converted second explanation image data for said lecturer in said second image data memory; first image display means operatively communicative with said first data memory for displaying said converted first image data for audiences to an audience; mixing means operatively communicative with said first and second image data memories for combining the contents of said first image data memory and the contents of said second image data memory to form compound video signals so that said converted first image data is projected on said transparent background of said converted second explanation image data; and second image display means for displaying said compound video signals to said lecturer.

In accordance with a second aspect of the present invention there is provided a method for processing and displaying data for a lecturer comprising the steps of: reading first data from a non-volatile memory; converting the first data into first image data for audiences; storing the converted first image data for audiences in a first image data memory; displaying the converted first image data for audiences from said first image data memory on first image display means; inputting second data for a lecturer corresponding to said image data for audiences; converting said second data for said lecturer into converted second image data for said lecturer which has a transparent background; storing the converted second image data for said lecturer in a second image data memory; combining the converted first image data for audiences from said first image data memory and the converted second image data for said lecturer from said second image data memory to form compound video signals so that the converted first image data is projected on said transparent background of the converted second image data; and displaying said compound video signals on second image display means to said lecturer.

(1) The non-volatile memory stores first data corresponding to an image for display to an audience and second data corresponding to an image for the lecturer. The image data for the image for the audience is converted into image data by the image data formation means. The image data for the lecturer is likewise converted by the image data formation means. The first image display means displays the converted image data to an audience. The second image display means receives signals from the mixing means and displays a compound image of the audience image and the information for the lecturer only. The lecturer uses the information displayed for the lecturer only to explain the images displayed to the audience.

Data for more than one image for display to the audience can be stored by the second image data memory. The lecturer can, accordingly, see the images for audience display and information for explaining the images to be displayed on the second image display means and can select a desired image instantaneously.

(2) Time image data providing information about the time is formed by the time data formation means based on the digital signals indicating the current time output by the clock means. An image is displayed on the second image display means based on the time image data formed as described above along with image data stored in the first image data memory. This enables the lecturer to be aware of the current time, etc. without looking at a separate clock.

(3) When the reception means receives transmitted messages the second image data memory stores the messages as message image data. Images are displayed on the second image display means for the lecturer based on both image data from the first image data memory and message image data stored in the said second image data memory.

The lecturer can, accordingly, see messages transmitted by watching the images displayed on the second image display means.

As will be clear from the above description, the image information display system according to this invention has the effects described in the following sections.

(1) Image information display system according to one aspect of this invention is provided with a second image display means for the lecturer in addition to a first image display means for audience. Images for the lecturer that include images to aid in explaining the images displayed to the audience are displayed on the second image display means based on data stored in the first image data memory and data stored in the second image data memory. The lecturer can, therefore, make clear and correct explanations while watching the image display system for the lecturer without it being necessary to look at memos, etc to aid explanation. As a number of images for display to the audience may be stored in the second image data memory for simultaneous display on the second image display means, the lecturer can select a desired image from many images displayed on the second image display means. Random access to the image data of desired images becomes possible allowing the lecturer to progress smoothly with a lecture.

(2) The image information display system according to another aspect of this invention is provided with a clock means, time image data formation means, and second image display means. Time image data formed by digital signals indicating the current time is output from the clock means and images including the time image and images based on data stored in the first image data memory are displayed on the second image display means. The lecturer can, therefore, devote himself to the lecture without confirming the time by looking at a separate clock and yet he still knows the time in order for the lecture to progress positively.

(3) Image information display system according to yet another aspect of this invention is provided with a reception means, a second image data memory and second image display means so that messages transmitted to the lecture can be read from the lecturers monitor allowing the lecturer to immediately take the steps necessary to comply with the displayed message.

The present invention will become more fully understood from the detailed description given hereinbelow and the accompanying drawings which are given by way of illustration only, and thus are not limitative of the present invention and wherein:

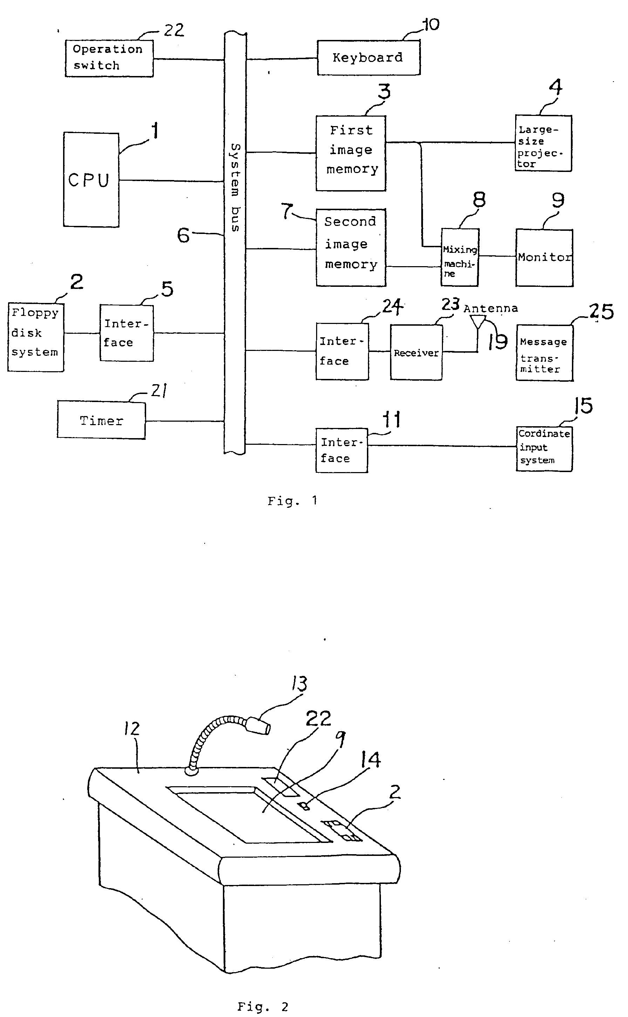

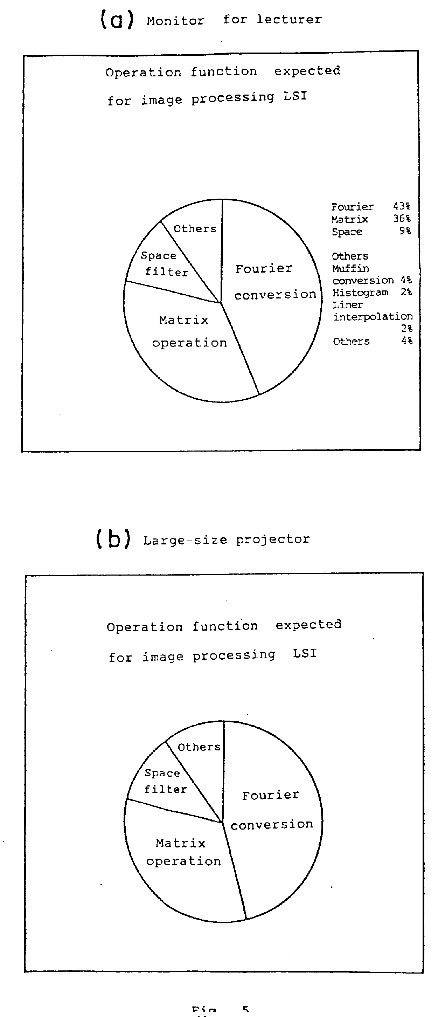

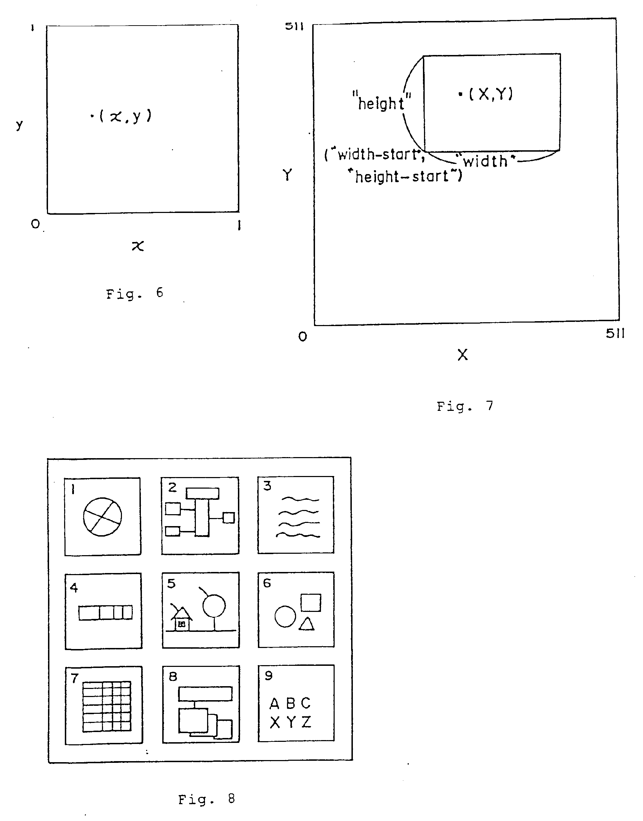

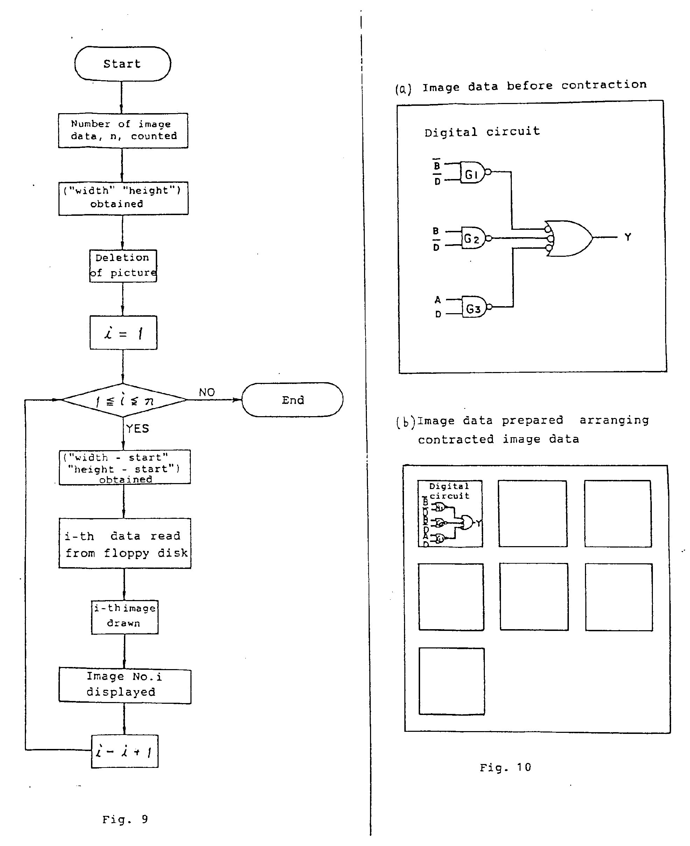

Fig. 1 is a block diagram of an embodiment of the image information display system according to this invention, Fig. 2 is a perspective view of the operator console, Fig. 5 shows examples of image display on a large-size projector and monitor for the lecturer, Fig. 6 is an explanatory diagram of coordinates on the image memory, Fig. 7 is an explanatory diagram of coordinates and calculation of coordinate values on a large-size projector of monitor, Fig. 8 shows an example of display of a plural number of contracted images on a monitor for the lecturer, Fig. 9 is a flow chart to obtain above contracted images with the image information display system, and Fig. 10 is an explanatory diagram to obtain contracted images with an image edition system.

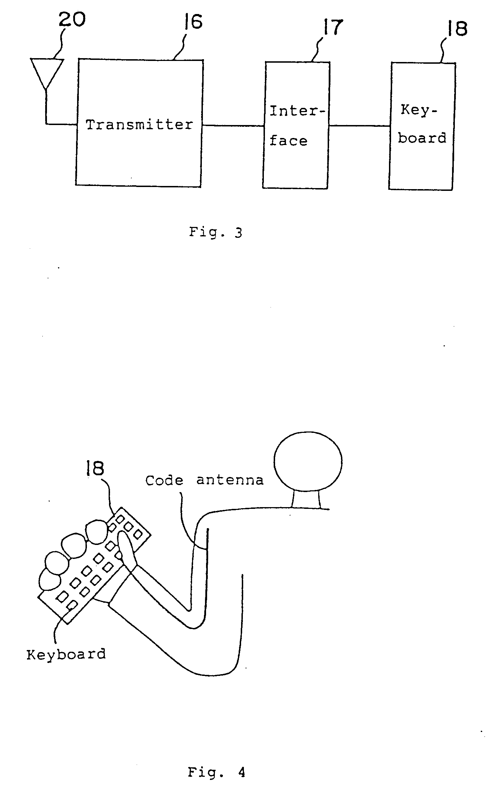

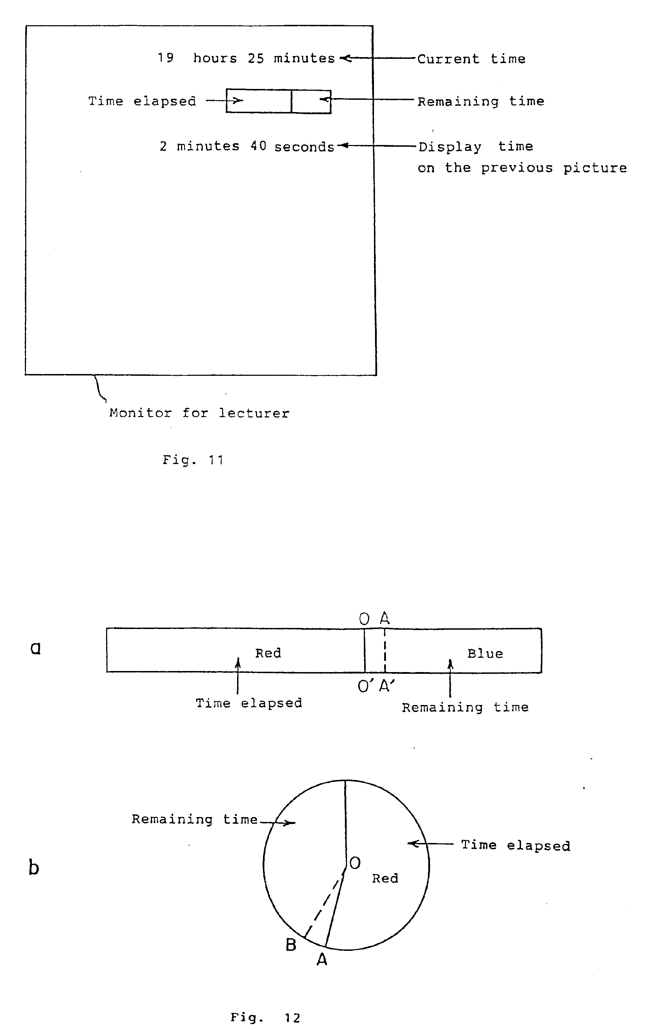

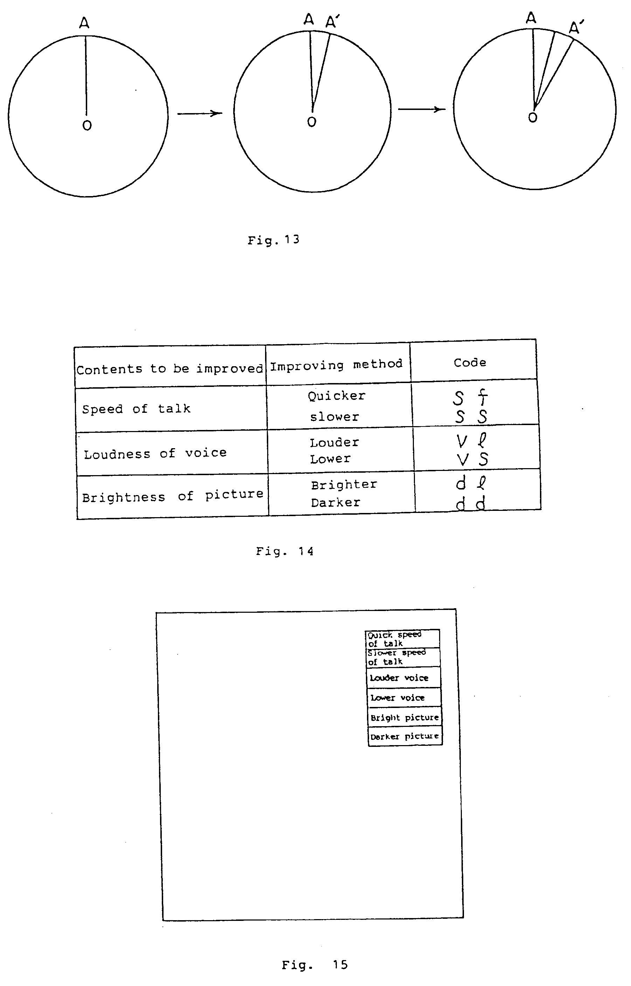

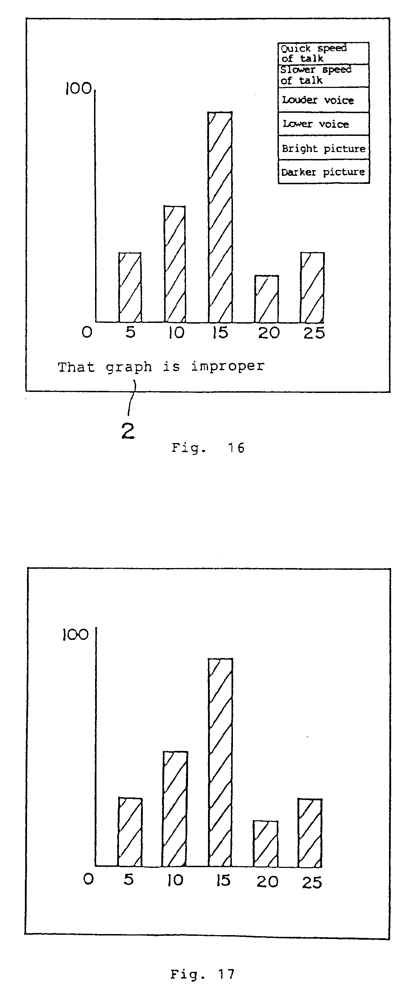

Fig. 11 shows an example of display on the said monitor for the lecturer, Fig. 12 shows an example of display of the time elapsed in the lecture and remaining time, and Fig. 13 is an explanatory diagram to make the drawing speed slower. Fig. 3 is a block diagram of a message transmission system, Fig. 4 is an explanatory diagram of a keyboard, Fig. 14 shows an example of message codes, Fig. 15 shows an example of an image based on the message image data, Fig. 16 shows an example of an image on the monitor for the lecturer, and Fig. 17 shows an example of an image on the large-size projector.

This invention will be explained in detail below referring to the embodiment shown in the figures

In Fig. 1, A Central Processing Unit (CPU) 1 controls the entire image information display system (referred to as "This System" hereinafter), forms, changes, and otherwise processes images. It writes picture element data to the first image memory 3 or second image memory 7 in accordance with a command code which is read by a floppy disk system 2 described later and output through the interface 5.

The floppy disk system 2 is a data reading means to read command code row data from a floppy disk which is a non-volatile outside memory. This command code row is edited and formed with an image edition system (not illustrated) provided independently of this system based on the image information and display charge processing information. The above-described floppy disk system 2 is connected with the CPU 1 through the interface 5 and system bus 6.

The above-described first image memory 3 has an image display function, stores image data to be displayed, and generates video signals corresponding to the image data. Images are displayed on an image display means for the lecture in accordance with these video signals. The image display means may for example be a large size projector of 100 inches with large pictures. The above-described large-size projector may comprise one or several colour Cathode Ray Tube (CRT). The first image memory 3 is connected with the CPU 1 , through the system path 6.

The second image memory 7 has an image display function similar to that of the first image memory 3. It stores image data for explaining the images to be displayed on the large-size projector 4, or image data used to display a plural number of contracted images at one time, while it generates video signals corresponding to this image data. For this reason, the number of bits per picture element is smaller than that of the first picture element memory 3 and the gradation or number of colours which can be expressed may be correspondingly smaller. The second image memory 7 is connected with the CPU 1 through the system path 6. The mixing system 8 is used to compound video signals generated by the said first image memory 3 and second image memory 7 and output them to the monitor 9 which is an image display means for lectures as described later.

The said monitor 9 is provided in the operator console for the lecturer as shown in Fig. 2 and images are displayed with the image based on the image data stored in the second image memory 7 over the image which is the same as the display image on the large-size projector 4 in response to the compounded video signals input from the mixing system 8. The form of these two types of images with one placed over another is obtained by the fact that the background of the image from the second image memory 7 has a transparent property and the display image of the large-size projector 4 is projected on this background part.

A coordinate input system 15 is provided on the monitor display 9. There are two types or coordinate input systems 15. The first is a system in which many infrared light emitting diodes are arranged at a constant interval along the right and lower sides on the picture of the said monitor 9. Beams of infrared light are caused to run across the monitor in a criss-cross pattern. A photo transistor is positioned at each point where an infrared light beam intercepted along the left and upper sides of the monitor 9 to provide the entire display of the monitor 9 with a coordinate input position. That is, by touching a finger at a desired position on the display picture, each of the infrared light beams in the lateral and vertical directions intercepted by the finger is detected by the corresponding photo transistor and the coordinates of the finger on the display can be obtained by determining which two photo transistors have detected an intercepted beam. The second type of coordinate input system is one in which a transparent conductive film is arranged as a matrix of transparent switches over the display. By touching a desired position with a finger, the resistance value or static electricity capacity between a pair of electrodes of a transparent switch will vary, and the coordinates of the display designated by the finger can be obtained. It is desirable to use either one of the above two methods as the coordinate input system 15. These are called touch panels and are commercially available. The coordinate input system 15 is connected to the system bus through the interface 11.

The operator console 12 is provided with a microphone 13 for the lecturer, floppy disk system 2, and the system start/stop switch 14 as shown in Fig. 2.

The timer 2 is set and reset by means of the CPU 1.When the time set is over, interrupt is demanded to the CPU 1. The operation switch 22 and timer 21 are used to cause specified events by external factors and acceptance of interrupt from these two by the CPU 1 can be deemed detection of the events by the external factors. There are plural operation switches 22 which are distinguished by numbering respectively.

Picture element values of guide diagrams, etc. of time display, time elapsed in the lecture, remaining time of lecture, and display time for each display image are recorded and, at the same time, video signals corresponding to these picture element values are generated.

In addition, message image data obtained from the message which is sent from the message transmission system 25 and received by the receptor 23 is stored and, at the same time, video signals corresponding to the message image data are generated.

The receptor 23 converts weak electric waves received with the antenna 19 to codes. When it receives codes from the message transmission system 25, it demands interrupt to the CPU 1 and demands processing for message display. Then the data which was converted to codes is converted to message image data by the CPU 1 and stored in the second image memory 7. Fig. 3 shows the message transmitter 25. The keyboard 18 is used to input the codes expressing a message when messages, etc. are transmitted to the lecturer by a specific third person about the method of talking of the lecturer and the picture displayed on the large-size projector 4. The codes input from the keyboard 18 are FM modulated by the transmitter 16 and transmitted from the antenna 20 as weak electric waves. The message transmitting system 25 is compact and handy so as to be carried freely by a specific third person. The specific third person here means a person who hears the lecture, evaluates the propriety of the lecture and points out points to be corrected.

Now how to use this system of above-described composition and its functions are described below referring to figures except for Figs. 1 and 2.

(1) First of all, data of image information required as supplement for explanation of images to be displayed on the large-size projector 4 and the image information of contracted originals is edited and prepared prior to the lecture or meeting and stored on a floppy disk. The lecturer prepares such a floppy disk on which required data is stored beforehand, sets this floppy disk to the floppy disk system 2 of the operator console 12 of this system provided at the site of lecture, etc., and gives instruction to start the image display by operating the switch 14. Then the said data is read from the floppy disk by the floppy disk system 2 and the CPU 1 writes picture element data respectively to the first and second image memory 3 and 7 according to the command code row of the data which was read from the said floppy disk. By the video signals corresponding to the image data generated from these first and second image memory 3 and 7, display images are projected on the large-size projector 4 and monitor 9.

Details will be given below taking an actual example.

A. Image for explaining display image of large-size projector.

When the lecturer inputs start of image display from the keyboard 10 shown in Fig. 1, the CPU 1 reads the command code row through the floppy disk system 2, converts it to image data, transfers it to the first image memory 3 and second image memory 7 and stores. At this time, display image data for the large-size projector 4 and image data for explaining the display image for the monitor 9 are distinguished by setting a flag added to the data indicating the images for the images to be displayed on the large-size projector 4 for the lecturer, and by not setting the flag for images to be displayed only on the monitor 9 for the lecturer for the purpose of explaining the images to be displayed for the lecturer. The CPU 1 stores the image data for which the flag is set to the first image memory 3 and the image data for which no flag is set to the second image memory 7. Images for the lecture are displayed on the large-size projector 4 from the said first image memory 3 and, on the other hand, images made by placing the image data for explaining the display image from the second image memory 7 over the image data from the said first image memory 3 are displayed on the monitor 9 for the lecturer. Fig. 5 shown examples of images displayed by the lecturer in his lecture. Fig. 5 (a) is an image displayed on the monitor 9 for the lecturer on the operator console 12 shown in Fig. 2 and Fig. 5 (b) is an image displayed on the large-size projector 4 of Fig. 1. In Figs (a) and (b), the circle graphs drawn on the left side are images output from the first image memory 3 shown in Fig. 1 and, on the other hand, the explanation about the circle graph shown on the right side of Fig. 5 (a) is the image output from the second image memory 7.

That is, explanation sentences such as "type of contents included in each percentage of calculating function and others", etc. which are not displayed on the images which the audience can see on the large-size projector 4 as shown in the example of Fig. 5 are displayed only for the lecturer through the monitor 9. The lecturer can make an explanation to the audience looking at the images for explaining the display images. Therefore, the lecturer need not see memos, etc. for explanation and can make complete explanation by looking at the monitor 9.

B. Image of contracted original

The lecturer can cause plural images to be displayed on the monitor 9 for the lecturer at one time by contracting the data for displaying the plural images which was read by the floppy disk system 2 as shown in Fig. 1. There are two methods of display in this case as shown below.

(a) Preparation of image of contracted original with image information display system

The data for image display which is read by the floppy disk is formed by a combination of a diagram drawing command and coordinate values drawn by that command. While the large-size projector 4 and the monitor 9 of this system are composed of 512 picture elements respectively vertically and horizontally, coordinates of each picture element of the said first image memory 3 and second image memory 7 are indicated by normalized coordinates respectively from 0 to 1 in the x and y axis direction with the left bottom as the origin as shown in Fig. 6. Therefore, x and y of the coordinate values (x, y) on the first and second image memory 8 and 7 are 0 x, and y 1 and the coordinate values (x, y) included in the data for image display which was read by the floppy disk system 2 are indicated according to them.

When indicating on the large-size projector 4 and monitor 9, the coordinate values X and Y on the large-size 4 or monitor 9 corresponding to the coordinate values (x, y) on the first and second image memory 3 and 7 are calculated as follows. As shown in Fig. 7, the "width" and "height" of the picture to be displayed on the large-size projector 4 and monitor 9 (1 "width" and "height" 511) are multiplied by the coordinate values (x, y) on the image memory 3 or 7 which has memorized the image data to be displayed, and added to the coordinate values of the drawing start point ("width - start", "height start")(but 0 "width - start", "height - start" 511). By this, the coordinates (X, Y) on the large-size projector 4 and monitor 9 corresponding to the coordinates (x, y) on the image memory 3 or 7 can be obtained and it becomes possible to draw the desired contracted image. That is, the coordinates (X, Y) on the monitor 9 may be expressed as follows using the coordinates (x, y) on the image memory 32 or 7:

$$
\left.\begin{array}{l}
X = \text{"width"} \; x + \text{"width} - \text{start"} \\
Y = \text{"height} \; y + \text{"height} - \text{start"}
\end{array}\right\} \;\dots\; 1
$$

By changing the size of the picture, "width" and "height", in this way, any image of desired size may be drawn and by changing the drawing start point ("width - start", "height - start"), the image may be drawn at any position on the monitor 9.

For instance, when displaying a sheet of image data as usual using the entire picture on the monitor 9, the above equation (1) may be calculated for;
    "width" = "height" = 511,
"width - start" = "height - start" = 0. To display all the images on the picture, the CPU 1 calculates the optimum "width" and "height" of each contracted image for the quantity n of images, finds the drawing start point ("width - start". "height - start" for each contracted image data based on this value and substitutes the above in the above equation (1). By substitution the coordinates (x, y) space of the said data which were read by the floppy disk system 2 in the above equation (1) successively to convert them to the coordinate values (X,Y) on the monitor 9, contracted images are displayed in the optimum position on the monitor 9. When the image data is data of a natural image, the data is thinned out so that the image size becomes the "width" and "height" and drawing is started on the monitor 9 from the drawing start point. As an example of these displays, the case of a display with all the display images contracted and displayed in one picture is shown in Fig. 8. In this example, the number of display images is 9 ( n = 9).

The flow chart of the contraction and display of the plural images is shown in Fig. 9. The CPU 1 reads the data by the floppy disk system 2 and counts the quantity n of the image data to be displayed on the large-size projector 4 only. Then the entire picture is deleted. Size "width" and "height" of each image and drawing start point of each image are calculated and drawings are drawn by the above-described method. A figure indicating the order of display of each image during the lecture is displayed as a part of each image. This can be displayed when the CPU 1 incorporates ROM in which dot image of a font of figures (0 - 9) are stored and figures are written on the corresponding image data of the second image memory 7.

(b) Preparation of image of contracted original by image an editing system

The lecturer contracts plural images to be used for the lecture, edits them as one data block in the form as shown in Fig. 8, and stores them on a floppy disk when editing the display images. At this time, he does not only contract the images by thinning it out but also leaves the image data as it is before contraction as shown in Fig. (b) The contracted images being and formed so that he can recognize immediately which image data the contracted image indicates when seeing that contracted image. When data for contracted images is prepared beforehand at the time of editing, the quantity of data increases. However, it can be displayed at a high speed in the same time as display of other images at the time of display.

Usually images are displayed on the large-size projector 4 in the following way. A value "count" to designate the image to be displayed is set at 0 before the lecture. Every time when the lecturer pushes a specified key of the keyboard 10 as a switch, the value of "count" increases by 1 and the CPU 1 reads the display image data with the same number as the value of "count" at that time by the floppy disk system 2. In order to display the image on the entire of the large-size projector 4.

"width" = "height" = 511, and
"width - start" = "height - start" = 0

are set, coordinates (x, y) which were read are substituted in equation (1), image data obtained is stored in the first image memory 3, and the result is displayed on the large-size projector 4. By this method, images can be displayed only according to the order of the images prepared by the image editing system. However, random access to desired images is possible by referring to contracted images displayed on the monitor 9. That is, the current value of "count" is once retracted to another place and the lecturer substitutes a figure corresponding to a desired image for the "count" from the keyboard 10 by watching the contracted images on the monitor 9. This enables the CPU 1 to read image data for display with the same number as the value of the "count" from the floppy disk and display a desired image on the monitor 9 and large-size projector 4 after processing in the same way as described above. The original image can be displayed again by substituting the value of "count" which has been retracted for "count". In another method, when the lecturer touches the monitor 9 at the position of a desired image with a finger the position indicated by the finger is detected by the coordinate input system 15 and the coordinates are input through the interface 11. Then the CPU 1 reads the image data for the image corresponding to those coordinates from the floppy disk, and displays the chosen image on the monitor 9 and large-size projector 4 by processing the images for display. Therefore, labour and time in advancing each image to be displayed forward or backward in order to display a desired image so as to carry the lecture forward smoothly is reduced . When the image data for display which has been prepared beforehand is not all used, the number of unused images is displayed on the monitor 9 as information for the lecturer. This can be realized when the CPU 1 stores the number of images which have already been indicated. As described above, there are three image display modes of the monitor 9 for the lecturer: that in which the image displayed is the same as on the large-size projector 4; that in which the image displayed includes data for explaining the displayed images; and that in which the image displayed is a contracted image. The CPU 1 can transfer the image data to the first and second image memory 3 and 7 in the image form corresponding to the mode set by the lecturer from the keyboard 10. Therefore the lecturer can select any desired image display mode freely.

(2) Information regarding the time is displayed as follows. For the current time display, the CPU 1 adds values indicating the current time every time an interrupt occurs, reads figures corresponding to the values indicating the current time from a character pattern generating circuit for which dot image of a font of figures (0 - 9), Chinese characters (time, minute, second), etc. are recorded, and writes them in the image memory 7 in Fig. 2 through the system bus 6. In this way, the time is displayed on the monitor 9 for the lecturer as shown in Fig. 11. For the time elapsed, by resting the value indicating the time before the lecture is started and adding the values every time an interrupt occurs by the timer 21 thereafter, the time elapsed is displayed in the same way as in the display of the current time.

The remaining time can be displayed by reducing the value indicating the time with the progress of time every time an interrupt occurs. For the display of time elapsed in the lecture or remaining time, there are methods of expressing by circle graphs, bar graphs, etc. as shown in Fig. 12, besides the above-described methods using figures or Chinese characters. It becomes possible to display the changes of time on the monitor 9 for the lecturer by writing picture element values which paint out a fixed amount of bar graphs or circle graph from the current position in the image memory 7 as shown in Fig. 2 though the system bus 6, every time when interrupt occurs by the timer 21. For instance, when interrupt occurs from the timer 21, distance between OO′ and AA′ in Fig. 12a and between OA and OB in Fig. 12b are painted out by the same color as the one painted already to shown the time elapsed. The time data to quicken the speed of the lecture is set by inputting it beforehand from the Keyboard 10 as shown in Fig. 1 before the lecture by the lecture and the time elapsed and remaining time are automatically counted when the lecture is started.

By the functions of the timer 21, the following 4 actions become possible making use of the fact lecture time remaining can be calculated;

(A) Inputting a desired time t from the keyboard beforehand at the time of editing.

A desired value t is recorded on the floppy disc as are other commands. At the time of lecture, the time t is read by a floppy disk system in the said memory 7, and the CPU 1 compares the remaining lecture time obtained based on the output value from the timer 21 and the set value t. When the remaining lecture time falls below the set value t, the entire picture on the monitor 9 for the lecturer flashes for a certain time. This is realized by rewriting the contents of the address which has stored the color of the background of the monitor 9 for the lecture of the look-up table of the image memory 7 as shown in Fig. 2 through the system bus 6 by the CPU 1. The time from the start of flashing to its end can be also set freely by inputting it at the time of editing by the lecturer.

(B) The lecturer displays the image data which was prepared at the time of editing in succession by pushing the operation switch 22 or keyboard 10 as shown in Fig. 2 at the time of lecture. He can carry the lecture forward to suit to his own convenience according to the lecture speed. When the remaining lecture time falls below the value t which was set at the time of editing as described above, image data which was scheduled to be displayed next is read from the floppy disk system 2, a diagram is drawn on the image memory 3 as shown in Fig. 1 by the CPU 1, and displayed on the large-size projector 4 and monitor 9 for the lecturer, thereafter according to the order prepared at the time of editing. Therefore, when the remaining lecture time becomes below t, images are displayed at a constant interval without any input from the lecturer and the lecturer can speed up the lecture by simplifying the explanation about each image according to the switching of images displayed on the monitor 9 for the lecturer.

(C) When displaying images in a lecture, the lecturer may reduce the drawing speed on the large-size projector 4 for the reason of emphasizing the drawing process for the audience, in addition to the instantaneous display of images when drawing diagrams. This is realized when the CPU 1 transmits data for drawing one drawing unit (1 line for painting out or 1 picture element for straight line) to the image memory 3 as shown in Fig. 1 from the floppy disk system 2 through the system bus 6 and then repeats executing the next one drawing unit after awaiting the waiting time tw which was set beforehand at the time of editing. For instance, when painting out a circle as shown in Fig. 13, it repeats actions (1) to draw OA, (2) await for the waiting time tw, and (3) draw OA′.

In this way, the lecturer can determine the drawing speed of one diagram so as to be convenient for his lecture at the time of editing. The set value for the drawing speed is also recorded on a floppy disk at the time of editing as is other command data, it is subsequently read by this system and executed. When the lecture time remaining falls below the value t which was set at the time of editing as described above, the CPU 1 only reads the set value from the floppy disk 2 and repeats drawing a diagram on the image memory 3 as shown in Fig. 1, without executing the above described waiting time tw, when drawing diagrams on the large projector 4 and monitor 9 for the lecture thereafter. Therefore, diagrams are drawn at a higher speed and the lecture time is shortened.

(D) The lecturer carries the lecture forward by displaying image data one by one on the large-size projector 4 and the monitor 9 for the lecture according to the order prepared at the time of editing. When the lecture time remaining falls below the set value t as described above, it is possible for him to display image data selectively without necessarily displaying all the images one by one on the large-size projector 4 and the monitor 9 for the lecturer. The lecturer gives priority to each one picture of the image data beforehand at the time of editing and displays all of the image data irrespective of the priority when the remaining lecture time is above the said set value t. However, when the remaining time falls below t, the CPU 1 checks the priority of image data which was read from the floppy disk, transmits the data of higher priority to the image memory 3 as shown in Fig. 1, to cause them to be displayed on the large-size projector 4 and the monitor 9 for the lecturer. Thus the lecture time can be shortened. The above programs (A) to (D) can be realized by providing this system with a timer 21. However it is possible for the lecture not to use any one of the above programs (A) to (D), use some of them, or use all of them. It is determined which are to be used by pushing the operation switch 22 as shown in Fig. 2 or keyboard 10 before the lecture for program (A) and during the lecture for programs (B) to (D).

(3) The above-described specific third person holds a message transmission system 25 and listens to the lecture together with the audience or in other place. He inputs points to be improved about the talk of the lecturer or pictures on displayl at any time from the keyboard 18. In the described embodiment, the improvements which can be input are "speed of speech" and "loudness of voice" of the lecturer, and "brightness of pictures", as shown in Fig. 14. Two improvement methods are established respectively for the contents and codes are provided for each of them. For instance, when the specified third person evaluates the voice of the lecturer to be low and transmits an instruction for louder voice, he inputs a code "V" from the keyboard 18 of the message transmission system 25. This code is FM-modulated by the transmitter 16 and transmitted to the image information display system by weak electric waves from the antenna 29. When this code is received by the antenna 19 of the image information display system, demand for interrupt to the CPU 1 is generated to demand processing for the message display corresponding to the code received. At this time, an image as shown in Fig. 16 is shown on the large-size projector 4 for the audience. When receiving the above-described code, the CPU 1 operates as follows in order to display a message on the monitor 9 for the lecturer. When receiving a code "V" indicating louder voice, the CPU 1 changes the colour of the part of "louder voice" in the message image displayed on the monitor 9 to shown the instruction for louder voice to the lecturer. This is realized by rewriting the colour of the column of the improvement items in the second image memory 7 according to the command from the CPU 1. At this time, it is also possible to repeat changing of the colour of the column of improvement items in the said image memory 7 many times and flash the column of improvement items on the picture to attract the attention of the lecturer furthermore. The lecturer knows his voice is low and the audience cannot hear him well by the changing colour of the column of "louder voice" and continues the lecture thereafter with care to speak louder.

In this embodiment, transmission of messages other than those shown in Fig. 14 by inputting characters directly from the keyboard 18 can be effected. The characters which were input are converted to character codes, which are transmitted to the image information display system from the transmitter 16, weak electric waves received by the receiver 23 are converted to character codes again, and the CPU 1 writes the image data corresponding to the character codes in the second image memory 7 and displays then on the monitor 9 for the lecturer. For instance, when the specific third person inputs "that graph is improper" from the keyboard 18, the message 27 "that graph is improper" is displayed in the picture of the monitor 9 as shown in Fig. 16. In this way, proper messages can be displayed on the monitor 9 from the outside about the lecture.

In the above embodiment, a transmitter and receiver of weak electric waves of FM are used as message transmission/reception means. However, LEDs (light emitting diode) of near-infrared rays or photo transistors which are light receiving elements may be used. While only certain embodiments of the present invention have been described, it will be apparent to those skilled in the art that various changes and modifications may be made therein without departing from the scope of the present invention as claimed.

## Claims

1. An image information display system for a lecturer comprising:

a removable non-volatile memory for storing first data corresponding to first image data for audiences, and second image data corresponding to data for a lecturer which provides an explanation for said image data for audiences;

reading means for reading said first data corresponding to said first image data for audiences and said second data corresponding to said data for said lecturer from said removable non-volatile memory;

a first image data memory for storing said first data corresponding to said first image data for audiences, said first data been written to said second image memory from said removable non-volatile memory by said reading means;

a second image data memory for storing said second data corresponding to said second image data for said lecturer, said second data been written to said second image data memory from said removable non-volatile memory by said reading means;

image data formation means for converting said first data from said first image data memory corresponding to said first image data for audiences into converted first image data for audiences and storing said converted first image data for audiences in said first image data memory, and converting said second data from said second image data memory corresponding to said data for said lecturer into converted second explanation image data for said lecturer which has a transparent background and storing said converted second explanation image data for said lecturer in said second image data memory;

first image display means operatively communicative with said first data memory for displaying said converted first image data for audiences to an audience;

mixing means operatively communicative with said first and second image data memories for combining the contents of said first image data memory and the contents of said second image data memory to form compound video signals so that said converted first image data is projected on said transparent background of said converted second explanation image data; and

second image display means for displaying said compound video signals to said lecturer.

2. An image information display system according to claim 1, wherein said image information display system includes:

clock means for generating digital signals indicating a plurality of time variables, and

time image data formation means for developing time image data for a lecturer in response to said digital signals corresponding to said plurality of time variables from said clock means, converting said second time image data for said lecturer into converted second time image data for said lecturer which has a transparent background and storing said converted second time image data for said lecturer in said second image data memory.

3. An image information display system according to claim 1 or 2, wherein said image information display system includes:

a message transmitter for transmitting messages by electric wave signals; a message receiver for receiving said messages transmitted from said message transmitter as said electric wave signals by an antenna and converting said messages received into second converted message image data which has a transparent background, and

a second image data memory for storing said second converted message image data from said message receiver as second message image data for a lecturer.

4. An image information display system according to any one of claims 1 to 3, wherein said first image display means comprises a large size projector.

5. An image information display system according to any one of claims 1 to 4, wherein said second image display means comprises a console monitor.

6. An image information display system according to any one of claims 1 to 5, wherein said reading means comprises a floppy disk system.

7. An image information display system according to claim 2, or any claim dependent thereon, wherein said plurality of time variables comprises a current time variable, a remaining time variable, and an elapsed time variable.

8. An image information display system according to claim 3 or any claim dependent thereon, wherein said message transmitter comprises a keyboard, an interface, a transmitter and an antenna operatively communicative with a system bus.

9. An image information display system according to any preceding claim, wherein said data corresponding to said image data includes data for a plurality of images, said non-volatile memory further stores data corresponding to combined image data including at least two images of said plurality of images, and said image data formation means further converts said data corresponding to said combined image data read by said reading means into said combined image data and stores said combined image data in said second image data memory.

10. An image information display system according to any preceding claim, wherein said data corresponding to said image data for audiences includes data for a plurality of images, and said image formation means includes means for converting said data corresponding to said image data read by said reading means into combined image data including at least two images of said plurality of images and for storing said combined image data in said second image data memory.

11. An image information display system according to claim 2 or any claim dependent thereon, further comprising:

input means for inputting a desired time; and

processing means for conducting a predetermined processing after said desired time from the beginning of a lecture has elapsed.

12. An image information display system according to claim 2 or any claim dependent thereon, wherein said image information display system further comprises:

time detect means for detecting whether the remaining period of a predetermined time is shorter than a predetermined period according to said digital signals from said clock means, and

display flash means for repeatedly flashing the display on the second image display means when the remaining period is detected to be shorter than said predetermined period by said time detect means.

13. An image information display system according to claim 2 or any one of claims 3 to 11 when dependent on claim 2, wherein said image information display system further comprises:

time detect means for detecting whether the remaining period of a predetermined time is shorter than a predetermined period according to said digital signals from said clock means, and

display change means for automatically changing the display on both said first image display means and said second image display means according to said converted first image data when the remaining period is detected to be shorter than said predetermined period by said time detect means.

14. An image information display system according to claim 13, wherein said first data corresponding to said first image data for an audience stored in said removable non-volatile memory are provided with priority data corresponding to a priority order, said image information display system further comprising:

display select means for displaying the images for display on said first image display means and said second image display means in predetermined order when the remaining period is detected to be longer than said predetermined period by said time detect means, and displaying selectively the images for display in said priority order according to said priority data on said first image display means and in said second image display means when the remaining period is detected to be shorter than said predetermined period by said time detect means.

15. A method for processing and displaying data for a lecturer comprising the steps of:

reading first data from a non-volatile memory;

converting the first data into first image data for audiences;

storing the converted first image data for audiences in a first image data memory;

displaying the converted first image data for audiences from said first image data memory on first image display means;

inputting second data for a lecturer corresponding to said image data for audiences;

converting said second data for said lecturer into converted second image data for said lecturer which has a transparent background;

storing the converted second image data for said lecturer in a second image data memory;

combining the converted first image data for audiences from said first image data memory and the converted second image data for said lecturer from said second image data memory to form compound video signals so that the converted first image data is projected on said transparent background of the converted second image data; and

displaying said compound video signals on second image display means to said lecturer.

**Patentansprüche**

1. Bildinformation-Anzeigesystem für einen Vortragenden, mit:
- einem austauschbaren nichtflüchtigen Speicher zum Abspeichern erster Daten, die ersten Bilddaten für Zuhörerschaften entsprechen, und zweiten Bilddaten, die Daten für einen Vortragenden entsprechen, die für eine Erläuterung der Bilddaten für die Zuhörerschaften dienen;
- einer Leseeinrichtung zum Lesen der ersten Daten, die den ersten Bilddaten für die Zuhörerschaften entsprechen, und der zweiten Daten, die den Daten für den Vortragenden entsprechen, aus dem austauschbaren nichtflüchtigen Speicher;
- einem ersten Bilddatenspeicher zum Abspeichern der ersten Daten, die den ersten Bilddaten für die Zuhörerschaften entsprechen, wobei die ersten Daten von der Leseeinrichtung vom wegnehmbaren nichtflüchtigen Speicher in den ersten Bildspeicher eingeschrieben wurden;
- einem zweiten Bilddatenspeicher zum Abspeichern der zweiten Daten, die den zweiten Bilddaten für den Vortragenden entsprechen, wobei die zweiten Bilddaten durch die Leseeinrichtung vom austauschbaren nichtflüchtigen Speicher in den zweiten Bilddatenspeicher eingeschrieben wurden;
- einer Bilddaten-Erstellungseinrichtung zum Umsetzen der ersten Daten vom ersten Bilddatenspeicher, die den ersten Bilddaten für die Zuhörerschaften entsprechen, in umgesetzte erste Bilddaten für Zuhörerschaften, und zum Abspeichern der umgesetzten ersten Daten für Zuhörerschaften im ersten Bilddatenspeicher, und zum Umsetzen der zweiten Daten vom zweiten Bilddatenspeicher, die den Daten für den Vortragenden entsprechen, in umgesetzte zweite Erläuterungsbilddaten für den Vortragenden, die über einen transparenten Hintergrund verfügen, und zum Abspeichern der umgesetzten zweiten Erläuterungsbilddaten für den Vortragenden im zweiten Bilddatenspeicher;
- einer ersten Bildanzeigeeinrichtung, die wirkungsmäßig mit dem ersten Datenspeicher verbunden ist, um die umgesetzten ersten Bilddaten für Zuhörerschaften einer Zuhörerschaft zu zeigen;
- einer Mischeinrichtung, die wirkungsmäßig mit dem ersten und zweiten Bilddatenspeicher verbunden ist, um den Inhalt des ersten Bilddatenspeichers und den Inhalt des zweiten Bilddatenspeichers zu kombinieren, um vereinigte Videosignale zu erzeugen, so daß die umgesetzten Bilddaten auf den transparenten Hintergrund der umgesetzten zweiten Erläuterungsbilddaten projiziert werden; und
- einer zweiten Bildanzeigeeinrichtung, um die vereinigten Videosignale dem Vortragenden zu zeigen.

2. Bildinformation-Anzeigesystem nach Anspruch 1, bei dem dieses Bildinformation-Anzeigesystem folgendes beinhaltet:
- eine Uhreinrichtung zum Erzeugen digitaler Signale, die mehrere Zeitvariablen anzeigen; und
- eine Zeitbilddaten-Erstellungseinrichtung zum Entwickeln von Zeitbilddaten für einen Vortragenden auf die digitalen Signale hin, die den mehreren Zeitvariablen von der Uhreinrichtung entsprechen, zum Umsetzen der zweiten Zeitbilddaten für den Vortragenden in umgesetzte zweite Zeitbilddaten für den Vortragenden, mit einem transparenten Hintergrund, und zum Abspeichern der umgesetzten zweiten Zeitbilddaten für den Vortragenden im zweiten Bilddatenspeicher.

3. Bildinformation-Anzeigesystem nach einem der Ansprüche 1 oder 2, bei dem dieses Bildinformation-Anzeigesystem folgendes beinhaltet:
- eine Meldungsübertragungseinrichtung zum Übertragen von Meldungen durch Signale mit Hilfe elektrischer Wellen; einen Meldungsempfänger zum Empfangen der von der Meldungsübertragungseinrichtung gesendeten Meldungen als Signale in Form elektrischer Wellen durch eine Antenne und zum Umsetzen der empfangenen Meldungen in zweite, umgesetzte Meldungsbilddaten mit transparentem Hintergrund; und
- einen zweiten Bilddatenspeicher zum Abspeichern der zweiten, umgesetzten Meldungsbilddaten vom Meldungsempfänger als zweite Meldungsbilddaten für einen Vortragenden.

4. Bildinformation-Anzeigesystem nach einem der Ansprüche 1 bis 3, bei dem die erste Bildanzeigeeinrichtung einen Projektor großer Abmessung aufweist.

5. Bildinformation-Anzeigesystem nach einem der Ansprüche 1 bis 4, **dadurch gekennzeichnet,** daß die zweite Bildanzeigeeinrichtung einen Konsolenmonitor aufweist.

6. Bildinformation-Anzeigesystem nach einem der Ansprüche 1 bis 5, **dadurch gekennzeichnet,** daß die Leseeinrichtung ein Diskettensystem aufweist.

7. Bildinformation-Anzeigesystem nach Anspruch 2 oder nach einem davon abhängigen Anspruch, bei dem die mehreren Zeitvariablen eine Variable für die aktuelle Zeit, eine Variable für die restliche Zeit und eine Variable für die verstrichene Zeit umfassen.

8. Bildinformation-Anzeigesystem nach Anspruch 3 oder einem von diesem abhängigen Anspruch, bei dem

**12**

die Meldungsübertragungseinrichtung eine Tastatur, eine Schnittstelle, einen Sender und eine Antenne aufweist, die wirkungsmäßig mit einem Systembus verbunden sind.

9. Bildinformation-Anzeigesytem nach einem der vorstehenden Ansprüche, bei dem die den Bilddaten entsprechenden Daten Daten für mehrere Bilder beinhalten, wobei der nichtflüchtige Speicher ferner Daten speichert, die kombinierten Bilddaten entsprechen, die mindestens zwei Bilder aus den mehreren Bildern enthalten, und wobei die Bilddaten-Erstellungseinrichtung ferner die den kombinierten Bilddaten, wie sie von der Leseeinrichtung gelesen wurden, in die kombinierten Bilddaten umsetzt und die kombinierten Bilddaten im zweiten Bilddatenspeicher abspeichert.

10. Bildinformation-Anzeigesystem nach einem der vorstehenden Ansprüche, bei dem die den Bilddaten für Zuhörerschaften entsprechenden Daten Daten für mehrere Bilder beinhalten, und bei dem die Bilderstellungseinrichtung eine Einrichtung zum Umsetzen der den von der Leseeinrichtung gelesenen Bilddaten entsprechenden Daten in kombinierte Bilddaten, die mindestens zwei Bilder der mehreren Bilder enthalten, und zum Abspeichern der kombinierten Bilddaten im zweiten Bilddatenspeicher aufweist.

11. Bildinformation-Anzeigesystem nach Anspruch 2 oder einem der davon abhängigen Ansprüche, ferner mit:
    - einer Eingabeeinrichtung zum Eingeben einer gewünschten Zeit; und
    - einer Verarbeitungseinrichtung zum Ausführen einer vorgegebenen Verarbeitung, nachdem die gewünschte Zeit ab dem Beginn eines Vortrags verstrichen ist.

12. Bildinformation-Anzeigesystem nach Anspruch 2 oder einem der von diesem abhängigen Ansprüche, bei dem dieses Bildinformation-Anzeigesystem ferner folgendes aufweist:
    - eine Zeitmeßeinrichtung zum Ermitteln, ob die restliche Periode der vorgegebenen Zeit kürzer als eine vorgegebene Periode ist, und zwar abhängig von den digitalen Signalen von der Uhreinrichtung; und
    - eine Anzeigeblinkeinrichtung zum Ausführen eines wiederholten Blinkvorgangs der Anzeige auf der zweiten Bildanzeigeeinrichtung, wenn von der Zeitmeßeinrichtung ermittelt wurde, daß die verbliebene Periode kürzer als die vorgegebene Periode ist.

13. Bildinformation-Anzeigesystem nach Anspruch 2 oder einem der Ansprüche 3 bis 11 in Abhängigkeit von Anspruch 2, bei dem dieses Bildinformation-Anzeigesystem ferner folgendes aufweist:
    - eine Zeitmeßeinrichtung zum Ermitteln, ob die restliche Periode der vorgegebenen Zeit kürzer als eine vorgegebene Periode ist, und zwar abhängig von den digitalen Signalen von der Uhreinrichtung; und
    - eine Anzeigeänderungseinrichtung zum automatischen Ändern der Anzeige sowohl auf der ersten Bildanzeigeeinrichtung als auch der zweiten Bildanzeigeeinrichtung abhängig von den umgesetzten ersten Bilddaten, wenn von der Zeitmeßeinrichtung erkannt wurde, daß die verbliebene Periode kürzer als die vorgegebene Periode ist.

14. Bildinformation-Anzeigesystem nach Anspruch 13, bei dem die ersten Daten, die den ersten Bilddaten für eine Zuhörerschaft entsprechen, wie sie im austauschbaren nichtflüchtigen Speicher abgespeichert sind, mit Prioritätsdaten versehen sind, die einer Prioritätsreihenfolge entsprechen, wobei dieses Bildinformation-Anzeigesystem ferner folgendes aufweist:
    - eine Anzeigeauswahleinrichtung zum Zeigen der auf der ersten Bildanzeigeeinrichtung und der zweiten Bildanzeigeeinrichtung zu zeigenden Bilder in vorgegebener Reihenfolge, wenn von der Zeitmeßeinrichtung erkannt wird, daß die verbliebene Periode länger als die vorgegebene Periode ist, und zum selektiven Anzeigen der anzuzeigenden Bilder in der Prioritätsreihenfolge gemäß den Prioritätsdaten auf der ersten Bildanzeigeeinrichtung und der zweiten Bildanzeigeeinrichtung, wenn von der Zeitmeßeinrichtung erkannt wurde, daß die verbliebene Periode kürzer als die vorgegebene Periode ist.

15. Verfahren zum Verarbeiten und Darstellen von Daten durch einen Vortragenden, mit den folgenden Schritten:
    - Lesen von Daten aus einem nichtflüchtigen Speicher;
    - Umsetzen der ersten Daten in erste Bilddaten für Zuhörerschaften;
    - Abspeichern der umgesetzten ersten Bilddaten für Zuhörerschaften in einem ersten Bilddatenspeicher;
    - Darstellen der umgesetzten ersten Bilddaten für Zuhörerschaften aus dem ersten Bilddatenspeicher auf einer ersten Bildanzeigeeinrichtung;
- Eingeben zweiter Bilddaten für einen Vortragenden, die den Bilddaten für die Zuhörerschaften entsprechen;
- Umsetzen der zweiten Bilddaten für den Vortragenden in umgesetzte zweite Bilddaten für den Vortragenden, die einen transparenten Hintergrund aufweisen;
- Abspeichern der umgesetzten zweiten Bilddaten für den Vortragenden in einem zweiten Bilddatenspeicher;
- Kombinieren der umgesetzten ersten Bilddaten für die Zuhörerschaften aus dem ersten Bilddatenspeicher und der umgesetzten zweiten Bilddaten für den Vortragenden aus dem zweiten Bilddatenspeicher, um vereinigte Videosignale so zu bilden, daß die umgesetzten ersten Bilddaten auf den transparenten Hintergrund der umgesetzten zweiten Bilddaten projiziert werden; und
- Darstellen der vereinigten Videosignale auf der zweiten Bildanzeigeeinrichtung für den Vortragenden.

**Revendications**

1. Système de présentation d'informations sous forme d'images pour un conférencier, comprenant :

une mémoire non volatile amovible pour mémoriser des premières données correspondant à des premières données d'image destinées à l'assistance, et des secondes données d'image correspondant à des données destinées à un conférencier qui fournit une explication pour lesdites données d'image destinées à l'assistance ;

un moyen de lecture pour lire lesdites premières données correspondant auxdites premières données d'image destinées à l'assistance et lesdites secondes données correspondant auxdites données destinées audit conférencier, à partir de ladite mémoire non volatile amovible ;

une première mémoire de données d'image pour mémoriser lesdites premières données correspondant auxdites premières données d'image destinées à l'assistance, lesdites premières données étant écrites dans ladite première mémoire d'images à partir de ladite mémoire non volatile amovible, par ledit moyen de lecture ;

une seconde mémoire de données d'image pour mémoriser lesdites secondes données correspondant auxdites secondes données d'image destinées audit conférencier, lesdites secondes données étant écrites dans ladite seconde mémoire de données d'image à partir de ladite mémoire non volatile amovible, par ledit moyen de lecture ;

un moyen de formation de données d'image pour convertir lesdites premières données, venant de ladite première mémoire de données d'image, et correspondant auxdites premières données d'image destinées à l'assistance, en premières données d'image converties destinées à l'assistance et pour mémoriser lesdites premières données d'image converties destinées à l'assistance dans ladite première mémoire de données d'image, et pour convertir lesdites secondes données, venant de ladite seconde mémoire de données d'image et correspondant auxdites données destinées audit conférencier, en secondes données d'image d'explication converties destinées audit conférencier, qui ont un fond transparent, et pour mémoriser lesdites secondes données d'image d'explication converties destinées audit conférencier dans ladite seconde mémoire de données d'image ;

un premier moyen de présentation d'images, en communication de fonctionnement avec ladite première mémoire de données pour présenter à l'assistance lesdites premières données d'image converties destinées à l'assistance ;

un moyen de mélange, en communication de fonctionnement avec lesdites première et seconde mémoires de données d'image pour combiner le contenu de ladite première mémoire de données d'image et le contenu de ladite seconde mémoire de données d'image, afin de former des signaux vidéo composites, de telle manière que lesdites premières données d'image converties soient projetées sur ledit fond transparent desdites secondes données d'image d'explication converties ; et

un second moyen de présentation d'images pour présenter lesdits signaux vidéo composites audit conférencier.

2. Système de présentation d'informations sous forme d'images selon la revendication 1, dans lequel ledit système de présentation d'informations sous forme d'images comprend :

un moyen d'horloge pour produire des signaux numériques indiquant une pluralité de variables de temps, et

un moyen de formation de données d'image de temps pour fournir des données d'image de temps au conférencier en réponse auxdits signaux numériques correspondant à ladite pluralité de variables de temps, venant dudit moyen d'horloge, pour convertir lesdites secondes données d'image de temps destinées audit conférencier en secondes données d'image de temps converties destinées audit conférencier, qui ont un fond transparent, et pour mémoriser dans ladite seconde mémoire de données d'image lesdites secondes données d'image de temps converties destinées audit conférencier.

3. Système de présentation d'informations sous forme d'images selon la revendication 1 ou 2, dans lequel ledit système de présentation d'informations sous forme d'images comprend :

un émetteur de messages pour émettre des messages par des signaux par onde électrique ; un récepteur de messages pour recevoir lesdits messages émis par ledit émetteur de messages, sous la forme desdits signaux par onde électrique, par une antenne, et pour convertir lesdits messages reçus en secondes données d'image de message converties, qui ont un fond transparent, et

une seconde mémoire de données d'image pour mémoriser lesdites secondes données d'image de message converties venant dudit récepteur de messages, en tant que secondes données d'image de message destinées à un conférencier.

4. Système de présentation d'informations sous forme d'images selon l'une quelconque des revendications 1 à 3, dans lequel ledit premier moyen de présentation d'images comprend un écran de projection grand format.

5. Système de présentation d'informations sous forme d'images selon l'une quelconque des revendications 1 à 4, dans lequel ledit second moyen de présentation d'images comprend un écran de contrôle dans le pupitre.

6. Système de présentation d'informations sous forme d'images selon l'une quelconque des revendications 1 à 5, dans lequel ledit moyen de lecture comprend un système à disque souple.

7. Système de présentation d'informations sous forme d'images selon la revendication 2, ou selon une revendication quelconque dépendant de celle-ci, dans lequel ladite pluralité de variables de temps comprend une variable d'heure actuelle, une variable de temps restant et une variable de temps écoulé.

8. Système de présentation d'informations sous forme d'images selon la revendication 3, ou selon une revendication quelconque dépendant de celle-ci, dans lequel ledit émetteur de messages comprend un clavier, une interface, un émetteur et une antenne en communication de fonctionnement avec un bus du système.

9. Système de présentation d'informations sous forme d'images selon l'une quelconque des revendications précédentes, dans lequel lesdites données, correspondant auxdites données d'image, comprennent des données pour une pluralité d'images, ladite mémoire non volatile mémorisant en outre des données correspondant à des données d'images combinées, comprenant au moins deux images de ladite pluralité d'images, et ledit moyen de formation de données d'image convertissant en outre lesdites données, correspondant auxdites données d'images combinées lues par ledit moyen de lecture, pour donner lesdites données d'images combinées et enregistrant lesdites données d'images combinées dans ladite seconde mémoire de données d'image.

10. Système de présentation d'informations sous forme d'images selon l'une quelconque des revendications précédentes, dans lequel lesdites données, correspondant auxdites données d'image destinées à l'assistance, comprennent des données pour une pluralité d'images, et dans lequel ledit moyen de formation d'images comprend un moyen pour convertir lesdites données, correspondant auxdites données d'images lues par ledit moyen de lecture, en données d'images combinées, comprenant au moins deux images de ladite pluralité d'images, et pour enregistrer lesdites données d'images combinées dans ladite seconde mémoire de données d'image.

11. Système de présentation d'informations sous forme d'images selon la revendication 2, ou selon une revendication quelconque dépendant de celle-ci, comprenant en outre :

un moyen d'entrée pour entrer un temps désiré ; et

un moyen de traitement pour effectuer un traitement prédéterminé après que ledit temps désiré, à partir du début d'une conférence, s'est écoulé.

**12.** Système de présentation d'informations sous forme d'images selon la revendication 2, ou selon une revendication quelconque dépendant de celle-ci, dans lequel ledit système de présentation d'informations sous forme d'images comprend en outre :

un moyen de détection de temps pour détecter si la durée restante d'un temps prédéterminé est plus courte qu'une durée prédéterminée en fonction desdits signaux numériques venant dudit moyen d'horloge, et

un moyen de clignotement de présentation pour faire clignoter, de manière répétée, la présentation sur ledit second moyen de présentation d'images lorsqu'il est détecté, par ledit moyen de détection de temps, que la durée restante est plus courte que ladite durée prédéterminée.

**13.** Système de présentation d'informations sous forme d'images selon la revendication 2, ou selon l'une quelconque des revendications 3 à 11, lorsqu'elles dépendent de la revendication 2, dans lequel ledit système de présentation d'informations sous forme d'images comprend en outre :

un moyen de détection de temps pour détecter si la durée restante d'un temps prédéterminé est plus courte qu'une durée prédéterminée en fonction desdits signaux numériques venant dudit moyen d'horloge, et

un moyen de changement de présentation pour changer automatiquement la présentation à la fois sur ledit premier moyen de présentation d'images et sur ledit second moyen de présentation d'images, en fonction desdites premières données d'image converties, lorsque la durée restante est détectée par ledit moyen de détection de temps comme étant plus courte que ladite durée prédéterminée.

**14.** Système de présentation d'informations sous forme d'images selon la revendication 13, dans lequel lesdites premières données, correspondant auxdites premières données d'image, destinées à une assistance, et mémorisées dans ladite mémoire non volatile, amovible, comportent des données de priorité correspondant à un ordre de priorité, ledit système de présentation d'informations sous forme d'images comprenant en outre :

un moyen de sélection de présentation pour présenter les images à afficher sur ledit premier moyen de présentation d'images et sur ledit second moyen de présentation d'images, dans un ordre prédéterminé, lorsqu'il est détecté par ledit moyen de détection de temps que la durée restante est plus longue que ladite durée prédéterminée, et pour présenter sélectivement les images à afficher dans ledit ordre de priorité, en fonction desdites données de priorité, sur ledit premier moyen de présentation d'images et sur ledit second moyen de présentation d'images, lorsqu'il est détecté, par ledit moyen de détection de temps, que la durée restante est plus courte que ladite durée prédéterminée.

**15.** Procédé pour le traitement et la présentation de données, pour un conférencier, comprenant les étapes consistant à :

extraire des premières données d'une mémoire non volatile ;

convertir les premières données en des premières données d'image destinées à l'assistance ;

enregistrer, dans une première mémoire de données d'image, les premières données d'image converties destinées à l'assistance ;

afficher, sur un premier moyen de présentation d'images, les premières données d'image converties destinées à l'assistance et venant de ladite première mémoire de données d'image ;

entrer des secondes données destinées à un conférencier, qui correspondent auxdites données d'image destinées à l'assistance ;

convertir lesdites secondes données destinées audit conférencier en des secondes données d'image converties, ayant un fond transparent et destinées audit conférencier ;

enregistrer, dans une seconde mémoire de données d'image, les secondes données d'image converties destinées audit conférencier ;

combiner les premières données d'image converties, destinées à l'assistance, et venant de ladite première mémoire de données d'image, et les secondes données d'image converties, destinées audit conférencier et venant de ladite seconde mémoire de données d'image, pour former des signaux vidéo composites de telle manière que les premières données d'image converties soient projetées sur ledit fond transparent des secondes données d'image converties ; et

à présenter lesdits signaux vidéo composites sur un second moyen de présentation d'images, destiné audit conférencier.

Fig. 1

Fig. 2

Fig. 3

Fig. 4

(a) Monitor for lecturer

Operation function expected
for image processing LSI

Others

Space
filter

Fourier
conversion

Matrix
operation

Fourier    43%
Matrix    36%
Space      9%

Others
Muffin
conversion 4%
Histogram  2%
Liner
interpolation
           2%
Others     4%

(b) Large-size projector

Operation function expected
for image processing  LSI

Others

Space
filter

Fourier
conversion

Matrix
operation

Fig   5

Fig. 6

Fig. 7

Fig. 8

20

Fig. 9

(a) Image data before contraction

Digital circuit

(b) Image data prepared arranging contracted image data

Fig. 10

19   hours 25 minutes ← ———Current time

Time elapsed ——→ [ →          ← ] ———Remaining time

2 minutes 40 seconds ← ———Display time
on the previous picture

Monitor for lecturer

Fig. 11

a

O A

Red        |   | Blue

O' A'

Time elapsed        Remaining time

b

Remaining time ——→

Time elapsed ←———

O Red

B   A

Fig. 12

Fig. 13

| Contents to be improved | Improving method | Code |
|---|---|---|
| Speed of talk | Quicker | $S f$ |
| | slower | $S S$ |
| Loudness of voice | Louder | $V \ell$ |
| | Lower | $V S$ |
| Brightness of picture | Brighter | $d \ell$ |
| | Darker | $d d$ |

Fig. 14

Fig. 15

Fig. 16

Fig. 17

24